Europäisches Patentamt

European Patent Office

Office européen des brevets

(19)

(11) Veröffentlichungsnummer: **0 360 247**
**A2**

(12) EUROPÄISCHE PATENTANMELDUNG

(21) Anmeldenummer: 89117390.8

(22) Anmeldetag: 20.09.89

(51) Int. Cl.⁵: **C01B 31/10**

(30) Priorität: 23.09.88 DE 3832387

(43) Veröffentlichungstag der Anmeldung:
28.03.90 Patentblatt 90/13

(84) Benannte Vertragsstaaten:
AT BE CH DE ES FR GB GR IT LI NL SE

(71) Anmelder: Ruhrkohle-Carborat GmbH
Windmühlenweg
D-4152 Kempen 3 / Tönisberg(DE)

(72) Erfinder: Schlütter, Aloys
Rheinstrasse 42
D-4152 Kempen 3(DE)
Erfinder: Brislinger, Ulf
Burgweg 47
D-4174 Issum 2(DE)

(54) Verfahren zur Herstellung von Aktivkohle.

(57) Nach der Erfindung werden auf besonders wirtschaftlichem Wege Aktivkohlepellets durch Verwendung von Anthrazitkohle hergestellt, die für Wasserreinigung und Rauchgasreinigung geeignet sind.

EP 0 360 247 A2

## Verfahren zur Herstellung von Aktivkohle

Aktivkohle hat eine vielfältige Bedeutung. Aktivkohle ist bereits im Altertum bekanntgeworden. Seinerzeit war die Verwendung der Heilkunde vorbehalten. Im vergangenen Jahrhundert kam Aktivkohle zum ersten Mal in eine großtechnische industrielle Anwendung. Die Aktivkohle wurde zum Entfärben von Zuckerlösungen verwendet. Daran hat sich ein vielfältiger industrieller Einsatz für die Behandlung von Flüssigkeiten und Gasen angeschlossen. Derzeit steht Aktivkohle in der Verwendung für den Umweltschutz im Vordergrund.

Unter Aktivkohle werden Kohlenstoffstrukturen aus Gemischen kleinster Graphitkristalle und amorphen Kohlenstoff mit poröser Struktur verstanden. Infolge der besonderen Porenstruktur hat Aktivkohle eine Oberfläche bis zu 1 500 m²/g. Der größte Teil dieser Oberfläche wird durch eine Vielzahl kleiner und kleinster Poren gebildet, die die Aktivkohle durchdringen. Infolge der extremen Oberfläche hat Aktivkohle einen hohen Wirkungsgrad als Adsorbens. Die Adsorption ist die Anreicherung eines Stoffes an der Oberfläche einer benachbarten Phase. Dabei ist zu unterscheiden zwischen physikalischer Adsorption und einer Chemiesorption. Die physikalische Adsorption basiert hauptsächlich auf van der Waals'schen Kräften. Die adsorbierte Substanz bleibt chemisch unverändert. Dagegen tritt bei der Chemiesorption eine chemische Bindung ein.

Zur Herstellung von Aktivkohle können vielfältige Rohstoffe Verwendung finden. Dazu gehören Holzkohle, Torfkoks oder Koksnußkohle, auch Braunkohlenkoks, Lignit oder Steinkohle.

Es ist auch bekannt, pulverförmige Kohle zu brikettieren. Die Presslinge werden zunächst bei mäßiger Temperatur verschwelt, um die Bindemittelanteile zu verkoken. Durch die anschließende Aktivierung wird von außen nach innen ein durchgängiges Porensystem erzeugt. Beim Aktivieren ist das Aktivierungsverfahren mit Dampf am meisten verbreitet. Der Dampf wird auf das 850 Grad Celsius bis 1 100 Grad Celsius heiße Zwischenprodukt gerichtet. Zwischen Dampf und Kohlenstoff kommt es zu einer Reaktion. Innerhalb der Poren wird Kohlenstoff von den Wänden entfernt. Es entsteht noch eine weitere Porösität. Die hier abgelaufenen Reaktionen sind als Boudouardsche Reaktionen bekannt, sie sind umkehrbar. Bei diesem Vorgang ist die Temperatur wichtig. Unterhalb von 800 Grad Celsius ist die Reaktion so gering, daß die Aktivierung unwirtschaftlich ist. Oberhalb von 1 100 Grad Celsius findet die Reaktion außen an den Kohlenstoffpartikeln statt. Das heißt, die Teilchen werden außen kleiner, nicht jedoch die Innenseite aktiviert.

Am Markt werden unterschiedliche Aktivkohlen angeboten. Die Aktivkohlen unterscheiden sich nicht nur in der Porösität bzw. in der Einsatzmischung, sondern auch ganz erheblich im Preis. Für eine Wirtschaftlichkeitsbetrachtung ist auch der Einsatzzweck der Aktivkohle außerordentlich bedeutend.

Mit der Wasserverunreinigung und der Rauchgasentschwefelung hat die Aktivkohle zusätzliche Bedeutung gewonnen. Alle bekannten Aktivkohlen verursachen jedoch erhebliche Kosten, so daß sie für den Umweltschutz ein beträchtliches Hindernis bilden.

Der Erfindung liegt deshalb die Aufgabe zugrunde, die Wirtschaftlichkeit von Aktivkohlen zu verbessern. Dabei geht die Erfindung von der Überlegung aus, daß eine auf die Wasserreinigung maßgeschneiderte Aktivkohle mit günstiger Kohlebasis der richtige Weg ist. Als Kohlebasis ist dabei ein hoher Anteil an Anthrazitkohlenstaub vorgesehen. Die Verwendung von Anthrazitkohle steht im Gegensatz zu der bisherigen Handhabung. Bei den üblichen Herstellungsverfahren für Aktivkohle wird in großem Umfang Gasflammkohle oder Fettkohle eingesetzt. Diese Gasflammkohle oder Fettkohle besitzt ein relativ hohes Dilatationsverhalten.

In Abhängigkeit von dem Anteil an Flüchtigen Bestandteilen, der Erweichungstemperatur, der Temperatur der Wiederverfestigung und der Zeit bildet sich die Porenstruktur. Bei höherflüchtigen und hochflüchtigen Kohlen ist die Dilatation besonders ausgeprägt. Anthrazit besitzt demgegenüber keine Dilatation. Gleichwohl hat sich die Erfindung den Anthrazitkohlen zugewandt, weil die Anthrazitkohlen sehr viel geringere Verluste bei den o.b. Wärmebehandlungen zeigen. Bei Gasflammkohlen und Fettkohlen ist davon auszugehen, daß Verluste bis 70 % der Einsatzkohle auftreten. Die Verluste setzen sich aus den Flüchtigen Bestandteilen und dem Abbrand beim Oxidieren zusammen.

Der sich aus den geringeren Verlusten ergebende Vorteil von Anthrazitkohle wird wirtschaftlich durchschlagen, wenn mindestens 50 % der Einsatzmischung aus Anthrazitkohle gewählt werden. Diese Prozentangabe wie auch nachfolgende Prozentangaben verstehen sich als Gewichtsprozente.

Mit der Wahl von Anthrazitkohle hat sich die Erfindung nicht allein wegen des fehlenden Dilatationsvermögens von Anthrazitkohle in Gegensatz zu der üblichen Herstellung von Aktivkohle gesetzt, sondern auch dadurch, daß Anthrazitkohle gegenüber Fettkohle und Gasflammkohle eine sehr verschiedene Porenstruktur besitzt. Die Poren sind sehr viel kleiner. Dies ist für die Reinigung solcher Medien von großem Vorteil, die auf geringvolumige Poren angewiesen sind.

Zugleich wird nach der Erfindung die Zugänglichkeit der geringvolumigen Poren für das zu reinigende Medium erhöht. Dies geschieht vorzugsweise mit einem Mischungsanteil von Gasflammkohle und/oder Fettkohle. Besonders vorteilhafte Einsatzmischungen besitzen Anthrazitanteile 70 bis 90 % Anteile und 5 bis 20 % Gasflammkohle und/oder Fettkohle.

Vorteilhaft ist auch die Verwendung eines Regenerates in der Einsatzmischung. Bei dem Regenerat handelt es sich um Rückstandsprodukte aus der Schwelung und Aktivierung. Diese Produkte fallen dort in Form von Abrieb bzw. Unterkorn oder dergleichen an und werden in die Einsatzmischung rückgeführt. Der Anteil beträgt vorzugsweise zwischen 5 und 15 % der Einsatzmischung.

Wahlweise wird durch die Zumischung von Zellulose auch Einfluß auf die Porenstruktur genommen. Dies ist jedoch bekannt. Die Zellulosezumischung erfolgt zumeist in der Form von Holzmehl. Bei erfindungsgemäßen Einsatzmischungen beträgt der Anteil an Zellulose wahlweise bis 8 %.

Auf die Porenstruktur der Aktivkohle wirkt sich im übrigen sehr günstig aus, wenn für die Aktivkohle Pellets verwendet werden, die im Wege der Naßpelletierung auf einem Pelletierteller gewonnen werden. Der Pelletierteller ist ein rotierender Teller, auf den das vorgemischte Pelletiergut aufgegeben wird. Infolge der Rotation lagern sich Körner aneinander an. Es entstehen Pellets, die mit zunehmender Dauer auf dem Pelletierteller wachsen. Nach der Erfindung werden Pellets mit einem Durchmesser von 1 bis 6 mm verwendet.

Die Pellets besitzen aus sich heraus bereits eine starke Porenstruktur, wobei den Pellets durch einen geeigneten Binder die notwendige Festigkeit gegeben wird. Ein besonders vorteilhafter Binder ist Stärke, insbesondere in flüssiger Form und in Form von Wachsmaisstärke. Der Bindemittelbedarf liegt je nach Binder zwischen 6 und 10 %, bei Stärke zwischen 6 und 8 %.

Die Wachsmaisstärke ist eine quellende Stärke. Quellende Stärke hat die Eigenschaft, auch gröbere Korngrößen zu pelletieren.

Die Struktur der Wachsmaisstärke ist grobteilig. Wesentliche Eigenschaften der Stärke sind eine Feuchtigkeit von max. 4 % nach der Herstellung, ca. 2 % Asche, ein pH-Wert der Lösung von 4 bis 6 und eine Viskosität von 2000 bis 4000 mPas in einer Konzentration von 20 % bei 20 Grad Celsius. Dergleichen Stärken lassen sich leicht und klumpenfrei in kaltem oder warmem Wasser lösen. Dabei wird ein Ansatzkonzentrat von mindestens 15 % bis max. 35 % empfohlen. Mit einem effektiven Rührwerk läßt sich die Auflösung erheblich beschleunigen. Die Lösung zeigt thixotropes Fließverhalten.

Die Verwendung von flüssiger Stärke ist auch deshalb von Vorteil, weil sie bei der Naßpelletierung den Feuchtigkeitsgehalt reduziert. Am Beispiel einer Suspension mit einem notwendigen Feuchtigkeitsgehalt von 24 % ergibt sich bei einem Anteil von 8 % flüssiger Stärke in der Feuchte lediglich ein Anteil von 16 % Feuchte, der bei der Trocknung wirksam wird bzw. auszutreiben ist.

Vorteilhafter lassen sich mit Wachsmaisstärke Pelletfestigkeiten erzielen, die ohne weiteres die Festigkeiten von Pellets erreichen, die im Wege des Pressens hergestellt worden sind. Zum Pressen sind diverse Werkzeuge bekannt. Alle auf diesem herkömmlichen Weg hergestellten Pellets haben den Nachteil, daß die Kohlepartikel durch den Preßvorgang sehr stark verdichtet werden.

Schließlich läßt sich auch ein wirtschaftlicher Vorteil durch chargenweise Trocknung bzw. Vorkalzinierung, Kalzinierung und Aktivierung im Wirbelbett erzielen. Im Wirbelbett wirkt sich die ausgesprochen kugelige Form der erfindungsgemäß auf dem Pelletierteller hergestellten Pellets besonders günstig aus. Derartige Pellets zeigen nur einen geringfügigen Abrieb, während durch Pressen hergestellte Pellets bzw. Briketts ein sehr starken Abrieb zeigen. Diese besondere Form der erfindungsgemäß hergestellten Pellets machen diese auch für herkömmliche Verfahren zur Herstellung von Aktivkohle geeignet.

Bei der herkömmlichen Herstellung ist auch die Behandlung im Wirbelbett bekannt. Die üblichen Wege kommerzieller Herstellung bedienen sich einer Wirbelbettkaskade, wobei die Pellets von einem Wirbelbett in das nächste getragen werden. Dabei lassen sich die Behandlungszeiten nur in weiten Grenzen kontrollieren. Durch chargenweisen Betrieb läßt sich dagegen die Verweildauer im Wirbelbett exakt festlegen. Das hat beträchtliche Vorteile für die Qualitätshaltung und Minimierung der Behandlungsdauer.

Nachfolgend sind einige Beispiele zur Herstellung erfindungsgemäßer Aktivkohlepellets gegeben:

Die Einsatzmischungen besitzen jeweils Kornfeinheiten mit 100 % kleiner 100μ. Diese Kornfeinheit gewährleistet eine ausreichende Pelletierfeinheit. Die Pelletierfeinheit kann bereits bei Körnungen mit 70 % kleiner 90μ gegeben sein. Die Kohle kann durch ein Flotationskonzentrat gebildet werden, welches von Haus aus die für eine Naßpelletierung vorgesehene Feuchte mitbringt. Die Kohle kann auch in ihrer Körnung durch Mahlen entstehen. Es ist Naßmahlung oder Trockenmahlung möglich. Durch Mahlen wird das innere, nicht zugängliche Porengefüge aufgeschlossen und die Aktivierbarkeit der Kohle verbessert.

Alle Einsatzstoffe, außer Netz- und Bindemittel, können vorkalziniert sein. Die Vorkalzinierung beinhaltet eine Erwärmung auf ca. 550 bis 600 Grad Celsius. Das verursacht eine Teilentgasung. Hierzu eignen sich alle bekannten Kalzinierverfahren, die einen inerten Betrieb sicherstellen.

Durch die Zugabe von vorkalzinierter höherflüchtiger Mischungsanteile an Kohle (Gasflammkohle oder Fettkohle) wird das Entgasungsverhalten und die Aktivierbarkeit verbessert. Der Anteil der vorkalzinierten Kohle beeinflußt den Bindemittelanteil. Mit vorkalzinierter Kohle läßt sich das Ausbringen verbessern und der Bindemittelbedarf verringern. Außerdem wird die Prozeßführung bei vorkalzinierter Kohle vereinfacht.

Die Einsatzmischungen - das sind die Einsatzkohlen, Netz- und Bindemittel sowie ggf. Holzmehle oder andere zellulosehaltige Einsatzstoffe - werden in einem Intensivmischer miteinander vorgemischt. In Abhängigkeit von der Drehzahl des Mischwerkzeuges werden Agglomerate aufgeschlossen. Sobald sich im Mischer ein Vorgranulat bildet, wird das Mischen beendet und die Mischung auf dem Pelletierteller zur gewünschten Körnung aufgerollt.

Anschließend werden die Pellets getrocknet. Der Trockenprozeß beginnt jeweils bei 30 bis 40 Grad Celsius. Es hat sich gezeigt, daß große Luftmengen bei niedriger Temperatur einen optimalen Trocknungsverlauf geben. Die getrockneten Pellets werden durch Siebung klassiert. Das Überkorn und/oder Unterkorn wird in die Einsatzmischung zurückgeführt.

Beim Trocknen wird der Sauerstoffghalt des Prozeßgases kleiner/gleich 8 % gehalten und die Temperatur auf 300 Grad Celsius gesteigert. Bei dieser Temperatur wird die in die Mischung gegebene Stärke unlöslich. Maßgebende Einflußfaktoren für die Trocknung sind die Pelletgröße, Bindemittelanteil und die Pelletdichte. Die Endfeuchte der Pellets liegt bei kleiner 1 %.

Die so hergestellten Pellets werden in einem Wirbelschichtofen entgast und anschließend aktiviert. Der Sauerstoffgehalt des Fluidgases wird jeweils kleiner 6 % gehalten. Die Aufheizgeschwindigkeit kann dabei 20 bis 30 Grad Celsius pro Minute betragen.

Bei Erreichen von etwa 850 Grad Celsius werden die Pellets aktiviert. Die Aktivierung läuft durch die spezifischen Eigenschaften der Wirbelschicht sehr schnell und materialschonend ab. Es hat sich gezeigt, daß z.B. 60 - 80 Minuten Aktivierungsdauer ausreichend sind, wenn das Aktiviergas bis zu 35 % aus Wasserdampf besteht. Im übrigen entspricht die Zusammensetzung des Aktiviergases dem Stand der Technik, d.h. hat das Aktiviergas eine übliche Zusammensetzung.

Der Inkohlungsgrad der eingesetzten Steinkohle ist bestimmt für die Porenverteilung. Je nach Einsatzmischung entstehen Pellets mit einer BET-Oberfläche von 700 bis 1500 $m^2$/g.

1. Herstellungsbeispiel:

8 % Stärkepulver; Körnung 15% > 0.09 mm;
Wassergehalt 4%
15 % Fettkohle; flüchtige Bestandteile: 22 - 24 %
Wassergehalt < 1 %
Asche 4 %
Körnung: 0 % > 0.09 mm
77 % Anthrazit; flüchtige Bestandteile: 8.8 %
Wassergehalt < 1 %
Asche 4.0 %
Körnung: 2 % > 0.09 mm

Die Einsatzstoffe werden trocken im Mischer vorgemischt und anschließend im Pelletierteller durch aufdüsen von ca. 22 - 25 % Wasser pelletiert.

2. Herstellungsbeispiel:

Zuerst wird eine Mischung aus:
25 % Wachsmaisstärke
75 % Wasser hergestellt. Diese Mischung wird durch einen Dissolver intensiv verrührt. Die Lösung der Stärke muß sichergestellt sein. In dem Intensivmischer werden anschließend folgende Komponenten vermischt:
24 % Stärkelösung ( 25% Feststoff)
20 % Gaskohle; flüchtige Bestandteile: 30 %
Asche: 5 %
Körnung: 0 % > 0.09 m
Wasssergehalt: < 1 %
56 % Anthrazitstaub; flüchtige Bestandteile: 8.8 %
Asche: 4 %
Körnung: 2 % > 0.09 mm
Wassergehalt: < 1 %

3. Herstellungsbeispiel:

Die modifizierte Wachsmaisstärke wird wie folgt vorbehandelt:
30 % Stärke werden mit
70 % Wasser gemischt.
Es wird eine 30 % ige Stärkelösung mit 95° C hergestellt.
24 % Stärkelösung ( 30 % Feststoff)
5 % Buchenholzmehl; 10 % > 0.09 mm;
8 % Fettkohle; flüchtige Bestandteile: 22 - 24 %
Asche: 4%
Wassergehalt: < 1 %
Körnung 0 > 0.09 mm
63 % Anthrazitstaub; flüchtige Bestandteile: 8.8 %
Asche: 4 %
Wassergehalt: < 1 %
Körnung: 2 % > 0.09 mm.

## 4. Herstellungsbeispiel:

Die modifizierte Wachsmaisstärke wird wie folgt vorbehandelt:
30 % Stärke werden mit
70 % Wasser gemischt.

Es wird eine 30 % ige Stärkelösung mit 95° C hergestellt.
24 % Stärkelösung ( 30 % Feststoff )
10 % Regenerat Asche: 5 - 6 %
Körnung: 0% > 0.09 mm
Flüchtige: 1 - 2 %
8 % Fettkohle;flüchtige Bestandteile: 22 - 24 %
Asche: 4 %
Wassergehalt: < 1 %
Körnung: 0 > 0.09 mm
58 % Anthrazitstaub; flüchtige Bestandteile: 8.8 %
Asche: 4 %
Wassergehalt: < 1 %
Körnung: 2 % > 0.09 mm.

## 5. Herstellungsbeispiel:

8 % Stärke; Körnung 15 % > 0.09 mm
10 % Flotationskonzentrat aus Fettkohle mit 22 - 24 % Flüchtigen
Asche: 5 %
Wassergehalt: ca. 20 %
Körnung: 100 % < 0.5 mm
61 % Anthrazitstaub; flüchtige Bestandteile: 8.8 %
Asche: 4 %
Wassergehalt: < 1 %
Körnung: 2 % > 0.09 mm.
18 - 22 % Wasser je nach Körnung des Konzentrates

Die drei Komponenten werden in einem Intensivmischer vorgemischt. Anschließend werden 18 - 22 % Wasser beigegeben und die Mischung fertig pelletiert.

## 6. Herstellungsbeispiel:

Die modifizierte Wachsmaisstärke wird wie folgt vorbehandelt:
30 % Stärke werden mit
70 % Wasser gemischt.

Es wird eine 30 % ige Stärkelösung mit 95° C hergestellt.
24 % Stärkelösung ( 30 % Feststoff)
15 % Fettkohle;flüchtige Bestandteile: 22 - 24 %
Asche: 4 %
Wassergehalt: < 1 %
Körnung: 0 > 0.09 mm
61 % Anthrazitstaub; flüchtige Bestandteile: 8.8 %
Asche: 4 %
Wassergehalt: < 1 %

Körnung: 2 % > 0.09 mm.

## Ansprüche

1. Verfahren zur Herstellung von Aktivkohle, gekennzeichnet durch die Verwendung einer Einsatzmischung staubförmiger Anthrazitkohle mit einem Gewichtsanteil von mindestens 50 % sowie Anteilen von Gasflammkohle und/oder Fettkohle und/oder Zellulose, wobei der Staub eine Feinheit von mindestens 70 % kleiner 90 $\mu$ aufweist.

2. Verfahren nach Anspruch 1, gekennzeichnet durch einen Anthrazitanteil von 70 bis 90 % und Anteilen an Gasflammkohle von 5 bis 20 % und zelluloseanteilen bis 8 %.

3. Verfahren nach Anspruch 2, gekennzeichnet durch die Verwendung eines Flotationskonzentrates aus der Aufbereitung von Steinkohle.

4. Verfahren nach Anspruch 2 oder 3, gekennzeichnet durch die Verwendung eines Regenerates.

5. Verfahren nach einem oder mehreren der Ansprüche 1 bis 4, gekennzeichnet durch die Verwendung vorkalzinierter Kohle.

6. Verfahren nach einem oder mehreren der Ansprüche 1 bis 5, gekennzeichnet durch eine Naßpelletierung auf einem Pelletierteller.

7. Verfahren nach Anspruch 6, gekennzeichnet durch Pelletdurchmesser von 1 bis 6 mm.

8. Verfahren nach Anspruch 6 oder 7, gekennzeichnet durch eine Suspension mit einer Feuchte von max. 30 %.

9. Verfahren nach einem oder mehreren der Ansprüche 6 bis 8, gekennzeichnet durch flüssige Stärke als Bindemittel.

10. Verfahren nach Anspruch 9, gekennzeichnet durch die Verwendung von Wachsmeisstärke.

11. Verfahren nach einem oder mehreren der Ansprüche 1 bis 10, gekennzeichnet durch chargenweise Behandlung der Pellets im Fluidbett.

12. Verfahren nach einem oder mehreren der Ansprüche 1 bis 11, gekennzeichnet durch Kohlenstaub mit mindestens 70 % kleiner 90 $\mu$.

13. Verfahren nach einem oder mehreren der Ansprüche 1 bis 12, gekennzeichnet durch vorkalzinierte Mischungsanteile an Fettkohle und/oder Gasflammkohle.